# FASCICULE DE BREVET EUROPEEN

(11) **EP 2 446 393 B1**
(45) Date de publication et mention de la délivrance du brevet: **22.05.2013**
(21) Numéro de dépôt: 11713316.5
(22) Date de dépôt: 07.03.2011
(51) Int. Cl.: G06K 7/10, A47F 9/04

(54) **DISPOSITIF ET PROCEDE DE LECTURE/ECRITURE AUTOMATISEE D'ETIQUETTES RFID.**
VORRICHTUNG UND VERFAHREN ZUM AUTOMATISCHEN LESEN/SCHREIBEN VON RFID ETIKETTEN
DEVICE AND METHOD FOR READING/WRITING AUTOMATICLY RFID TAGS

(30) Priorité: 02.11.2010 FR 1059020
(43) Date de publication de la demande: 02.05.2012
(73) Titulaire: I.E.R., 92150 Suresnes (FR)
(72) Inventeur: GENTELET, Franck, 78280 Guyancourt (FR); BOUVERESSE, Jean-Clément, 95110 Sannois (FR)
(74) Mandataire: Akdogan, Nurhak
(86) Numéro de dépôt international: PCT/FR2011/050468
(87) Numéro de publication internationale: WO 2012/025675

(56) Documents cités:
- EP-A1- 1 204 065
- EP-A1- 1 251 450
- EP-A1- 1 717 772
- EP-A1- 1 914 662
- EP-A2- 1 248 244
- WO-A1-2006/110189

## Description

La présente invention concerne un dispositif de lecture/écriture automatisée d'étiquettes RFID. Elle concerne également un procédé de lecture/écriture de telles étiquettes.

Le domaine de l'invention est le domaine des dispositifs de lecture d'étiquettes RFID non portés lors de leur utilisation et plus particulièrement des bornes ou box de lecture d'étiquettes RFID disposées sur des objets.

De nos jours les étiquettes RFID sont utilisées couramment pour l'identification, le suivi et la gestion d'objets. Les systèmes utilisant la technologie RFID permettent une gestion automatisée plus fiable et plus rapide d'objets dans de nombreux domaines.

L'utilisation des étiquettes RFID s'accompagne de la nécessité de disposer de dispositifs de lecture d'étiquettes RFID. Plus particulièrement, l'utilisation d'étiquettes RFID dans le commerce pour la vente de produits s'accompagne de la nécessite de disposer de bornes de lecture automatique ou semi automatique utilisables directement par les consommateurs.

Actuellement, il existe des appareils de lecture d'étiquettes RFID portables et sans fil permettant de lire une donnée d'identification RFID depuis une étiquette RFID. Pour réaliser une lecture d'une étiquette RFID il est nécessaire de porter l'appareil de lecture et de le diriger dans la direction de l'objet portant l'étiquette RFID et ce pour chaque objet muni d'une étiquette RFID, ce qui nécessite un temps de manipulation important.

Il existe également des dispositifs de lecture d'étiquettes RFID comportant une ou plusieurs antennes RFID non portables. Ces dispositifs se présentent le plus souvent sous la forme d'une « cage de lecture », également appelée « tunnel » de lecture, au travers de laquelle/duquel tous les objets munis d'une étiquette RFID doivent passer par exemple grâce à un tapis roulant. Ce type de dispositifs nécessite de disposer d'un moyen d'acheminement, tel qu'un tapis roulant, sur lequel est agencée une cage de lecture. Par ailleurs, il est nécessaire de disposer d'un tapis roulant suffisamment long pour permettre de déposer les objets en amont de la cage de lecture et de récupérer les objets en aval de la cage de lecture. Or, un tel ensemble constitué d'un tel tapis roulant et d'une cage de lecture occupe beaucoup de place. Par ailleurs, il est souvent nécessaire de déposer les objets un par un sur le tapis roulant pour améliorer la lecture de chacune des étiquettes RFID et pour des questions de dimensions de la cage de lecture, ce qui nécessite également de nombreuses manipulations. Un dispositif comprenant les caractéristiques du préambule de la revendication 1 est connu du document EP-A-1 717 772 ou EP-A-1 914 662.

Un but de la présente invention est de remédier aux inconvénients précités.

Un autre but de l'invention est de proposer un dispositif de lecture/écriture d'étiquettes RFID de faibles dimensions et réalisant une lecture d'étiquettes RFID portés par des objets sans manipulation desdits objets.

Enfin, un autre but de l'invention est de proposer un dispositif de lecture/écriture d'étiquettes RFID non porté lors de son utilisation et de faibles dimensions, tout en assurant une bonne lecture des objets munis d'étiquettes RFID.

L'invention propose d'atteindre les buts précités par un dispositif de lecture/écriture d'étiquettes RFID comprenant les caracteristiques de la revendication 1.

Dans le dispositif selon l'invention, l'emplacement de lecture est directement accessible par l'utilisateur. Le dispositif selon l'invention ne nécessite pas un moyen d'acheminement tel qu'un tapis roulant pour amener les objets munis d'étiquettes RFID à l'emplacement de lecture.

Ainsi, le dispositif selon l'invention prévoit un emplacement de lecture prévu pour recevoir les objets munis d'étiquettes RFID à lire/écrire. Un tel emplacement prédéfini permet d'optimiser le positionnement de l'au moins une antenne RFID pour optimiser la lecture/écriture des étiquettes RFID portés par les objets déposés à cet emplacement et ainsi d'assurer une bonne lecture/écriture de ces étiquettes RFID.

De plus, le positionnement de l'au moins une antenne pouvant être optimisée autour ou dans l'emplacement de lecture prédéfini, il est possible de réaliser la lecture/écriture de plusieurs étiquettes RFID de plusieurs objets sans avoir à les manipuler séparément.

Par ailleurs, le dispositif selon l'invention propose un emplacement prédéfini où les objets peuvent être déposés directement par le consommateur sans faire usage d'un tapis roulant ou plus généralement d'un moyen d'acheminement quelconque. Ainsi, le dispositif selon l'invention présente des dimensions plus faibles et occupe moins de place que les dispositifs de l'état de la technique comportant un tapis roulant.

Avantageusement, le dispositif selon l'invention peut comprendre des moyens mécaniques pour modifier l'orientation de l'au moins un objet disposé audit emplacement de lecture.

Ainsi, l'orientation des objets portant les étiquettes RFID présents dans/à l'emplacement de lecture est modifiée, ce qui permet de modifier l'orientation des étiquettes RFID et d'améliorer la lecture/écriture des étiquettes RFID.

Dans un mode de réalisation particulier, les moyens mécaniques peuvent comprendre un plateau mobile. Le plateau mobile peut être disposé au fond de l'emplacement de lecture. Le plateau mobile peut être muni par exemple d'une liberté en translation selon un ou plusieurs axes et/ou d'une liberté en rotation autour d'un ou plusieurs axes, et mis en mouvement mécaniquement par un ou plusieurs moteurs.

Le dispositif selon l'invention comprend des moyens de pesée fournissant un signal relatif au poids total des objets présents à/dans l'emplacement de lecture, ledit signal modifiant la puissance du signal émis par ladite au moins une antenne RFID.

Ainsi, le dispositif selon l'invention permet d'adapter la puissance du signal RF émis par l'au moins une antenne RFID en fonction du poids de l'ensemble des objets dont les étiquettes RFID sont à lire/écrire.

Ainsi, le dispositif selon l'invention permet d'utiliser des ondes de puissance suffisante et adaptée au nombre d'étiquettes RFID se trouvant à l'emplacement de lecture tout en permettant :
- de limiter les interférences avec d'autres systèmes de lecture, et
- d'éviter la lecture d'autres étiquettes ne se trouvant pas dans l'emplacement de lecture.

Cette caractéristique du dispositif selon l'invention est particulièrement avantageuse lorsque tous les objets présentent un poids sensiblement similaire et connu. Dans ce cas, le poids total mesuré permet de déterminer le nombre d'objets et donc d'étiquettes RFID présents à/dans l'emplacement de lecture et ainsi de modifier la puissance du signal de lecture/écriture en fonction de ce nombre.

Les moyens de pesée peuvent comprendre au moins une balance disposée au fond de l'emplacement de lecture.

Dans un mode de réalisation particulier, les moyens de pesée constituent au moins en partie les moyens mécaniques pour modifier l'orientation de l'au moins un objet disposé à/dans l'emplacement de lecture. Par exemple, lorsque les moyens mécaniques pour modifier l'orientation de l'au moins un objet déposé à/dans l'emplacement de lecture comprennent un plateau mobile et les moyens de pesée comprennent une balance, le plateau mobile peut être le plateau de la balance.

Avantageusement, le dispositif selon l'invention peut en outre comprendre des moyens isolant disposés autour d'au moins une partie de l'emplacement de lecture et de l'au moins une antenne de lecture pour limiter la propagation des ondes en dehors de l'emplacement de lecture et éventuellement la propagation des ondes extérieures vers l'emplacement de lecture. Ainsi, le dispositif selon l'invention permet d'améliorer la lecture/écriture des étiquettes RFID en limitant les perturbations. Par conséquent, il est possible d'agencer plusieurs dispositifs de lecture d'étiquettes RFID dans un espace réduit.

Dans un mode de réalisation particulier, les moyens isolants peuvent comprendre une mousse isolante à la fréquence des ondes émises par l'au moins une antenne RFID de lecture/écriture. Un exemple de mousse isolante peut être le C-RAM LF commercialisé par Cumming Microwave.

Le dispositif selon l'invention peut en outre comprendre des moyens de détection de présence ou de dépôt d'au moins un objet à l'emplacement de lecture. Ces moyens de détection de présence peuvent être agencés pour émettre un signal déclenchant l'activation et/ou la désactivation de l'émission de signaux RF de lecture/écriture par l'au moins une antenne RFID.

Selon un exemple de réalisation particulier, les moyens de détection de présence peuvent comprendre un ou plusieurs capteurs infrarouges disposés autour/dans/à l'emplacement de lecture.

Selon un autre exemple les moyens de détection peuvent comprendre au moins en partie les moyens de pesée. Ainsi, lorsque le poids mesuré par les moyens de pesée à l'emplacement de lecture varie ou est supérieur à un poids préalablement déterminé, cela peut désigner la présence d'objets munis d'étiquettes RFID à l'emplacement de lecture.

Le dispositif selon l'invention peut comprendre, dans une version particulière, entre une et quatre antennes RFID orientées sensiblement vers un centre géographique prédéterminé de l'emplacement de lecture.

Dans une version particulière du dispositif selon l'invention, l'emplacement de lecture peut se présenter sous la forme d'une ouverture comportant deux parois latérales et une paroi arrière entourant ladite ouverture et dépassant en hauteur ladite ouverture.

L'ouverture peut être disposée sensiblement à une hauteur moyenne de la taille d'un consommateur pour faciliter le dépôt des objets ou d'un sac comprenant les objets dans l'ouverture.

Toujours dans cette version particulière du dispositif selon l'invention et lorsque le dispositif selon l'invention comporte quatre antennes RFID :
- une antenne peut être disposée au milieu de chaque paroi latérale de l'ouverture et au-dessus de ladite ouverture, chaque antenne étant orientée d'un angle de 15° vers le bas et en direction de ladite ouverture, et
- deux antennes peuvent être disposées à l'avant de l'ouverture et en dessous de ladite ouverture, chaque antenne étant orientée d'un angle de 15° vers le haut et en direction de ladite ouverture.

Selon un autre aspect de l'invention il est proposé un dispositif d'encaissement comprenant :
- un dispositif de lecture/écriture d'étiquettes selon l'invention, et
- des moyens de paiement automatisé.

Les moyens de paiement automatisé peuvent être agencés pour coopérer directement ou indirectement avec le dispositif de lecture pour réaliser un encaissement automatisé.

Par ailleurs, les moyens de paiement automatisé peuvent être intégrés dans le dispositif de lecture/écriture selon l'invention.

Selon encore un autre aspect de l'invention, il est proposé un procédé de lecture d'étiquettes RFID par au moins une antenne mettant en oeuvre le dispositif selon l'invention, chacune desdites étiquettes étant portée par un objet, caractérisé en ce qu'il comprend une variation ou détermination de la puissance de lecture en fonction du poids total desdits objets.

Le procédé selon l'invention peut en outre comprendre, avant une étape de lecture/écriture, une étape de mesure du poids total des objets portant les étiquettes RFID à lire/écrire et une génération d'un signal électrique dont la puissance est calculée fonction du poids total mesuré et éventuellement d'un poids moyen par objet.

Le procédé selon l'invention peut également comprendre une modification mécanique de l'orientation d'au moins un objet portant une étiquette RFID lors de la lecture.

Le procédé selon l'invention peut être utilisé pour l'encaissement automatique d'objets munis d'étiquettes RFID et plus particulièrement d'objets présentant chacun un poids sensiblement identique.

D'autres avantages et caractéristiques apparaîtront à l'examen de la description détaillée d'un mode de réalisation nullement limitatif, et des dessins annexés sur lesquels :
- les figures 1-3 sont des représentations schématiques selon différentes vues d'un exemple de réalisation d'un dispositif selon l'invention ; et
- la figure 4 est une représentation schématique sous forme d'un diagramme d'un procédé selon l'invention.

Sur les figures et dans la suite de la description, les éléments communs à plusieurs figures conservent la même référence.

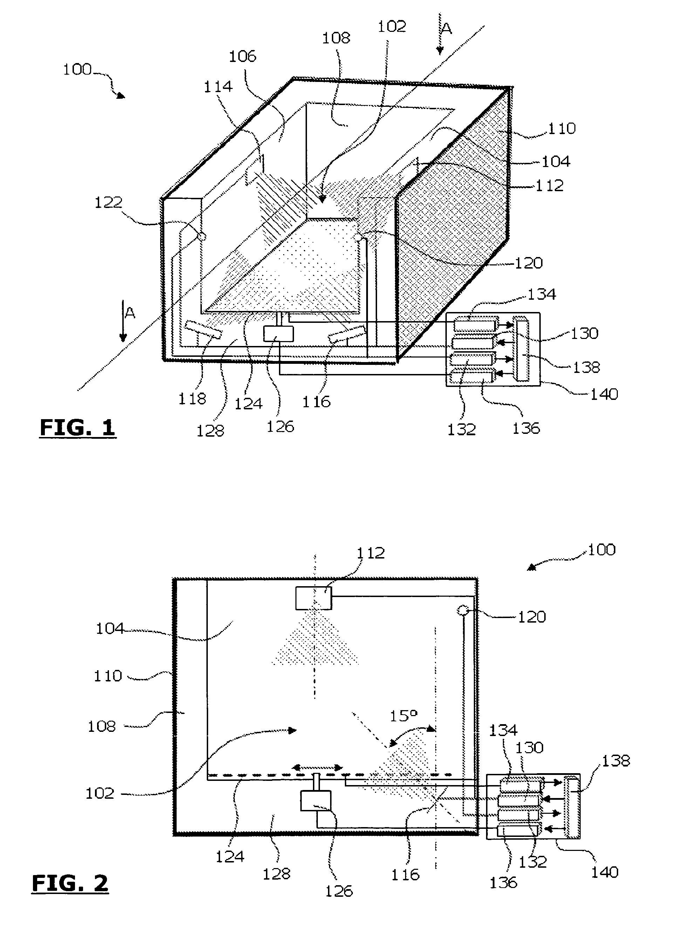

Les figures 1-3 sont des représentations schématiques d'un dispositif 100 selon l'invention selon différentes vues.

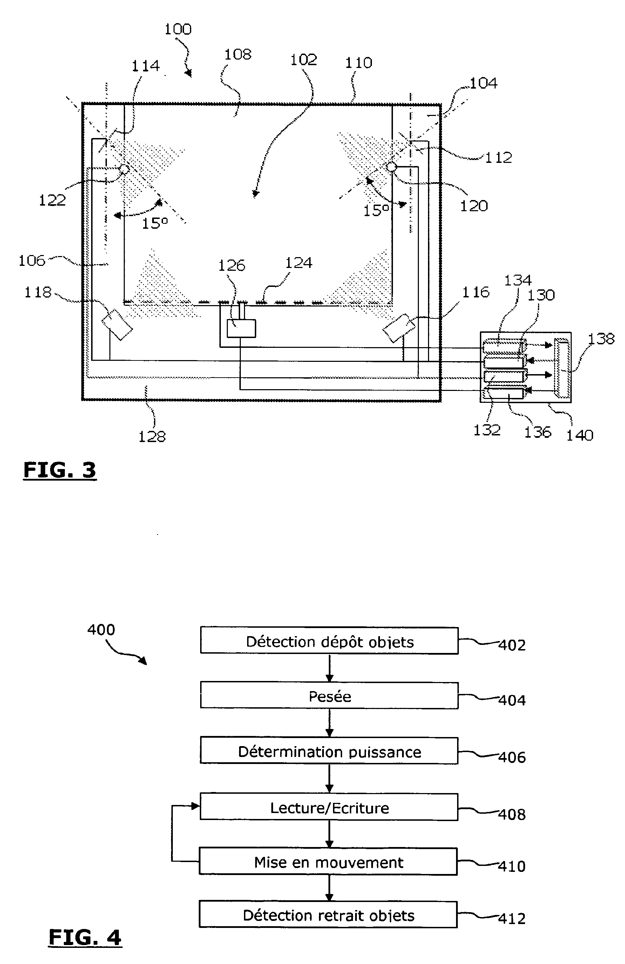

La figure 1 est une représentation du dispositif 100 selon une vue isométrique, la figure 2 une représentation en coupe selon le plan AA et la figure 3 une représentation selon une vue de devant.

Le dispositif 100 comporte une ouverture 102 constituant un emplacement de lecture/écriture prévu pour recevoir des objets munis chacun d'une étiquette RFID. L'emplacement de lecture/écriture 102 est accessible à l'utilisateur qui dépose directement tous les objets à cet emplacement sans avoir à les manipuler un par un.

Le dispositif 100 comporte deux parois latérales 104 et 106 et une paroi arrière 108 autour de l'emplacement de lecture/écriture 102. Le dispositif 100 ne comporte pas de paroi à l'avant ni au-dessus de l'emplacement de lecture/écriture pour permettre à un consommateur de déposer facilement les objets munis d'étiquettes RFID. Par ailleurs, ne comportant pas de paroi supérieure, le dispositif de lecture/écriture permet de lire/écrire des objets de hauteurs importantes.

Le dispositif 100 comporte une enveloppe/couche isolante 110 réalisée en une mousse isolante et agencée pour limiter les interférences des ondes dans l'ouverture avec les ondes externes. Cette couche 110 est disposée dans l'épaisseur de toutes les parois de la caisse.

Le dispositif 100 comprend sur chaque paroi latérale 104 et 106 une antenne RFID, respectivement 112 et 114. Les antennes 112 et 114 sont disposées dans la partie haute des parois latérales 104 et 106, en hauteur par rapport à l'emplacement de lecture/écriture 102 et sensiblement au milieu de ces parois 104 et 106.

Deux autres antennes 116 et 118 sont disposées à l'avant en dessous de l'emplacement de lecture/écriture 102.

Toutes les antennes RFID 112-118 sont orientées vers l'emplacement de lecture/écriture 102. Ainsi, toutes les antennes présentent une inclinaison de 15° vers l'emplacement de lecture par rapport à un axe vertical passant par le centre des antennes 112-118.

Le dispositif 100 comprend en outre deux cellules de détection de présence 120 et 122 disposées sur les parois latérales 104 et 106 à l'avant de ces parois pour détecter le dépôt et le retrait d'objets munis d'étiquettes RFID dans l'emplacement de lecture/écriture 102.

Par ailleurs, une balance représentée schématiquement par un plateau 124 sur les figures 1-3 est disposée au fond de l'emplacement de lecture/écriture et agencée pour mesurer.

Le plateau 124 de la balance est par ailleurs monté mobile et peut être mis en mouvement par des moyens moteurs 126 agencés dans la paroi inférieure 128 du dispositif 100.

Les antennes RFID 112-118 sont reliées à un module RFID 130 fournissant le signal à émettre par les antennes 112-118 et recevant et traitant le signal reçu par chacune des antennes 112-118.

D'une manière similaire, les cellules détectrices 120 et 122 sont reliées à un module de détection 132, la balance 124 est reliée à un module de pesée 134 et les moyens moteurs 126 sont reliés à un module commande de mise en mouvement 136.

Tous les modules 130-136 sont reliés à un module central 138 recevant des données transmises par le module détection 132 et le module de pesée 134 pour commander les modules RFID 130 et le module de commande de mise en mouvement 136.

Lorsqu'un consommateur 120, 122 dépose des objets à l'emplacement de lecture 102, les cellules détectrices détectent la présence d'objets à l'emplacement de lecture 102 et transmettent cette information au module de détection 132 qui alerte le module central 138. Le module central 138 active le module RFID 130 en vue d'une lecture/écriture des étiquettes RFID des objets déposés à l'emplacement de lecture. Le module de pesée 134 transmet le poids total des objets présents dans l'emplacement de lecture/écriture. En fonction du poids total des objets, le module central 138 émet une consigne de puissance de signal au module RFID 130. Le module RFID 130 génère un signal électrique de la puissance correspondante et l'envoi aux antennes RFID 112-118. Si besoin le module central 138 transmet également au module de mise en mouvement 136 une consigne pour que le plateau 124 soit mis en mouvement pour changer l'orientation des objets présents à l'emplacement de lecture 102. Le module de mise en mouvement 136 active et désactive les moyens moteur 126 en fonction de la ou des consignes reçues du module central 138.

Lorsque, le consommateur retire les objets de l'emplacement de lecture 102, les cellules détectrices 120-122 détectent l'enlèvement des objets et transmettent l'information au module de détection 132 qui alerte le module central 138. Dès réception de cette information le module central 138 désactive le module RFID 130.

L'ensemble des modules peut être disposé dans un boîtier unique 140. Ce boîtier représenté schématiquement sur les figures 1-3 peut être disposé dans l'épaisseur sur une surface extérieure d'une des parois du dispositif 100.

Les antennes RFID 112-118 peuvent être disposées dans l'épaisseur des parois du dispositif à proximité de la surface intérieure de ces parois, c'est-à-dire des surfaces des parois du côté de l'emplacement de lecture/écriture 102.

Le dispositif 100 peut également comporter une couche (non représentée) réalisée en un matériau tendre et disposée sur le plateau 124 de sorte que lorsque ce dernier est mis en mouvement les objets se trouvant sur le plateau ne soient pas abimés.

Le dispositif 100 peut être mis en oeuvre dans un appareil d'encaissement automatisé comprenant en outre des moyens de paiement automatisé tels que des moyens de paiement par carte bancaire, par carte de fidélité ou par liquide.

La figure 4 est une représentation schématique d'un procédé 400 de lecture d'étiquettes RFID selon l'invention.

Le procédé 400 comprend une première étape 402 de détection de dépôt d'un ou plusieurs objets dans l'emplacement de lecture/écriture.

A l'étape 404, une pesée du poids total des objets déposés dans l'emplacement de lecture est réalisée.

En fonction du poids total, une puissance du signal radiofréquences à générer est déterminée à l'étape 406.

A l'étape 408, un signal radiofréquences de puissance correspondante est généré et émis par les antennes RFID et une opération de lecture/écriture est réalisée.

Si besoin, les objets sont mis en mouvement lors d'une étape 410 réalisée soit pendant l'étape 408 de lecture/écriture soit alternativement avec l'étape 408 de lecture/écriture jusqu'à lecture/écriture de l'ensemble des étiquettes RFID.

Lorsque, l'utilisateur retire les objets, une étape 412 de détection du retrait des objets met fin au procédé.

Le procédé 400 peut être mis en oeuvre dans un procédé d'encaissement automatisé comprenant en outre une ou plusieurs étapes de paiement automatisé.

Bien entendu l'invention n'est pas limitée aux exemples qui viennent d'être décrits.

## Revendications

1. Dispositif (100) de lecture/écriture d'étiquettes RFID comprenant :
- un emplacement (102), dit de lecture, prédéfini prévu pour y poser au moins un objet muni d'une étiquette RFID,
- au moins une antenne RFID (112-118), et
- au moins un lecteur RFID (130) coopérant avec ladite antenne RFID (112-118), ladite au moins une antenne RFID (112-118) étant agencée pour lire ladite au moins une étiquette RFID dudit au moins un objet posé audit emplacement de lecture (102) ;
ledit dispositif étant **caractérisé en ce qu'**il comprend en outre des moyens de pesée (124) fournissant un signal relatif au poids total des objets présents à/dans l'emplacement de lecture (102), ledit signal modifiant la puissance du signal émis par ladite au moins une antenne RFID (112-118).

2. Dispositif selon la revendication 1, **caractérisé en ce qu'**il comprend des moyens mécaniques (124,126) pour modifier l'orientation de l'au moins un objet disposé à/dans l'emplacement de lecture (102).

3. Dispositif selon la revendication 2, **caractérisé en ce que** les moyens de pesée (124) constituent au moins en partie les moyens mécaniques (124,126) pour modifier l'orientation de l'au moins un objet disposé à/dans l'emplacement de lecture (102).

4. Dispositif selon l'une quelconque des revendications précédentes, **caractérisé en ce qu'**il comprend en outre des moyens (110) isolant disposés autour d'au moins une partie de l'emplacement de lecture (102) et de l'au moins une antenne de lecture (112-118) pour limiter la propagation des ondes en dehors de l'emplacement de lecture (102).

5. Dispositif selon la revendication 4, **caractérisé en ce que** lesdits moyens isolant (110) comprennent une mousse isolante à la fréquence des ondes émises par l'au moins une antenne de lecture (112-118).

6. Dispositif selon l'une quelconque des revendications précédentes, **caractérisé en ce qu'**il comprend en outre des moyens de détection (120,122) de présence ou de dépôt d'au moins un objet à l'emplacement de lecture (102).

7. Dispositif selon l'une quelconque des revendications précédentes, **caractérisé en ce qu'**il comprend entre une et quatre antennes RFID (112-118) orientées sensiblement vers un centre géographique de l'emplacement de lecture (102).

8. Dispositif selon l'une quelconque des revendications précédentes, **caractérisé en ce que** l'emplacement de lecture (102) se présente sous la forme d'une ouverture (102) comportant deux parois latérales (104,106) et une paroi arrière (108) entourant ladite ouverture (102) et dépassant en hauteur ladite ouverture (102).

9. Dispositif selon les revendications 7 et 8, **caractérisé en ce que** :
- une antenne (112,114) est disposée au milieu de chaque paroi latérale (104,106) de l'ouverture (102) et au-dessus de ladite ouverture (102), chaque antenne (112,114) étant orientée d'un angle de 15° vers le bas et en direction de ladite ouverture (102), et
- deux antennes (116,118) sont disposées à l'avant de l'ouverture (102) et en dessous de ladite ouverture (102), chaque antenne (116,118) étant orientée d'un angle de 15° vers le haut et en direction de ladite ouverture (102).

10. Dispositif d'encaissement comprenant :
- un dispositif (100) de lecture d'étiquettes selon l'une quelconque des revendications précédentes,
- des moyens de paiement automatisé.

11. Procédé de lecture d'étiquettes RFID par au moins une antenne (112-118) mettant en oeuvre le dispositif selon l'une quelconque des revendications précédentes, chacune desdites étiquettes étant portée par un objet, **caractérisé en ce qu'**il comprend une détermination (406) de la puissance de lecture en fonction du poids total desdits objets.

12. Procédé selon la revendication 11, **caractérisé en ce qu'**il comprend en outre une modification (110) mécanique de l'orientation d'au moins un objet portant une étiquette RFID lors de la lecture (408).

13. Utilisation du procédé selon l'une quelconque des revendications 11 ou 12 pour l'encaissement automatique.

## Patentansprüche

1. Lese-/Schreibvorrichtung (100) für RFID Etiketten, umfassend:
- einen sogenannten Erfassungsplatz (102), vorbestimmt und zum Abstellen mindestens eines mit einem RFID Etiketten ausgestatteten Gegenstandes vorgesehen,
- mindestens eine RFID Antenne (112-118) sowie
- mindestens ein mit dieser RFID Antenne (112-118) zusammenarbeitendes RFID Lesegerät (130), wobei diese mindestens eine RFID Antenne (112-118) dafür ausgebildet ist, dieses wenigstens eine RFID Etikett dieses mindestens einen am Erfassungsplatz (102) abgestellten Gegenstands auszulesen;
wobei diese Vorrichtung **dadurch gekennzeichnet ist, dass** sie außerdem Wägevorrichtungen (124) umfasst, die ein Signal über das Gesamtgewicht der am/im Erfassungsplatz (102) befindlichen Gegenstände ausgibt, wobei dieses Signal die Leistung des aus dieser wenigstens einen RFID Antenne (112-118) kommenden Signals ändert.

2. Vorrichtung nach Anspruch 1, **dadurch gekennzeichnet, dass** sie mechanische Vorrichtungen (124, 126) umfasst, um die Ausrichtung des mindestens einen am/im Erfassungsplatz (102) befindlichen Gegenstands zu ändern.

3. Vorrichtung nach Anspruch 2, **dadurch gekennzeichnet, dass** die mechanischen Vorrichtungen (124, 126) zur Änderung der Ausrichtung des mindestens einen am/im Erfassungsplatz (102) befindlichen Gegenstands wenigstens zum Teil aus den Wägevorrichtungen (124) bestehen.

4. Vorrichtung nach einem der vorhergehenden Ansprüche, **dadurch gekennzeichnet, dass** sie außerdem isolierende, um mindestens einen Teil des Erfassungsplatz (102) und um die mindestens eine Leseantenne (112-118) gelagerte Vorrichtungen (110) umfasst, um die Übertragung der Wellen über den Erfassungsplatz hinaus einzudämmen.

5. Vorrichtung nach Anspruch 4, **dadurch gekennzeichnet, dass** diese isolierenden Vorrichtungen (110) einen Isolierschaum mit der Frequenz der aus der mindestens einen Leseantenne (112-118) ausgegebenen Wellen enthalten.

6. Vorrichtung nach einem der vorhergehenden Ansprüche, **dadurch gekennzeichnet, dass** sie außerdem Vorrichtungen (120, 122) zur Erkennung mindestens eines am Erfassungsplatz (102) befindlichen oder abgestellten Gegenstands umfasst.

7. Vorrichtung nach einem der vorhergehenden Ansprüche, **dadurch gekennzeichnet, dass** sie zwischen einer und vier, im Wesentlichen zu einem geographischen Mittelpunkt des Erfassungsplatzes (102) hin ausgerichteten RFID Antennen (112-118) umfasst.

8. Vorrichtung nach einem der vorhergehenden Ansprüche, **dadurch gekennzeichnet, dass** der Erfassungsplatz (102) als eine Öffnung (102) mit zwei Seitenwänden (104, 106) und mit einem Rückenwand (108) um diese Öffnung (102) herum und diese Öffnung (102) in der Höhe überragend ausgebildet ist.

9. Vorrichtung nach Ansprüchen 7 und 8, **dadurch gekennzeichnet, dass**:
- eine Antenne (112, 114) in der Mitte der jeweiligen Seitenwände (104, 106) der Öffnung (102) und oberhalb dieser Öffnung (102) gelagert ist, wobei jede Antenne (112, 114) in einem Winkel von 15 Grad nach unten und zu dieser Öffnung (102) hin ausgerichtet ist, und
- zwei Antennen (116, 118) vor der Öffnung (102) und unterhalb dieser Öffnung (102) gelagert sind, wobei jede Antenne (116, 118) in einem Winkel von 15 Grad nach oben und zu dieser Öffnung (102) hin ausgerichtet ist.

10. Kassiervorrichtung, umfassend:
- eine Lesevorrichtung (100) für Etiketten nach einem der vorhergehenden Ansprüche,
- Vorrichtungen für automatisierte Zahlungsmittel.

11. Verfahren zum Auslesen von RFID Etiketten durch mindestens eine Antenne (112-118) anhand der Vorrichtung nach einem der vorhergehenden Ansprüche, wobei jede dieser Etiketten von einem Gegenstand getragen wird, **dadurch gekennzeichnet, dass** es eine Bestimmung (406) der Leseleistung entsprechend dem Gesamtgewicht der jeweiligen besagten Gegenstände umfasst.

12. Verfahren nach Anspruch 11, **dadurch gekennzeichnet, dass** es außerdem eine mechanische Änderung (110) der Ausrichtung mindestens eines mit einem RFID Etikett versehenen Gegenstands während des Lesevorgangs (408) umfasst.

13. Verwendung des Verfahrens nach einem der vorhergehenden Ansprüche 11 oder 12 zum automatisierten Kassieren.

## Claims

1. A device (100) for reading/writing RFID tags comprising:
- a so-called pre-defined reading site (102), on which at least one object carrying an RFID tag is to be placed,
- at least one RFID antenna (112-118), and
- at least one RFID reader (130) co-operating with said RFID antenna (112-118), said at least one RFID antenna (112-118) being arranged in such a way as to read said at least one RFID tag of said at least one object placed on the reading site (102);
said device being **characterized in that** it comprises moreover weighing means (124) providing a signal relating to the total weight of the objects present on/in the reading site (102), said signal modifying the power of the signal emitted by said at least one RFID antenna (112-118).

2. The device according to claim 1, **characterized in that** it comprises mechanical means (124, 126) for modifying the orientation of the at least one object placed on/in the reading site (102).

3. The device according to claim 2, **characterized in that** the weighing means (124) constitute at least partially the mechanical means (124, 126) for modifying the orientation of the at least one object placed on/in the reading site (102).

4. The device according to any one of the preceding claims, **characterized in that** it comprises moreover insulating means (110) arranged around at least one part of the reading site (102) and at least one reading antenna (112-118) in order to limit the propagation of waves outside the reading site (102).

5. The device according to claim 4, **characterized in that** said insulating means (110) comprise a foam which is insulating at the frequency of the waves emitted by the at least one reading antenna (112-118).

6. The device according to any one of the preceding claims, **characterized in that** it comprises moreover means (120, 122) for detecting the presence or deposit of at least one object on/in the reading site (102).

7. The device according to any one of the preceding claims, **characterized in that** it comprises between one and four RFID antennae (112-118) orientated substantially towards a geographical centre of the reading site (102).

8. The device according to any one of the preceding claims, **characterized in that** the reading site (102) is in the form of an opening (102) comprising two side walls (104, 106) and a rear wall (108) surrounding said opening (102) and being higher than said opening (102).

9. The device according to claims 7 and 8, **characterized in that**:
- one antenna (112, 114) is placed in the middle of each side wall (104, 106) of the opening (102) and above said opening (102), each antenna (112, 114) being orientated at an angle of 15° downwards and in the direction of said opening (102), and
- two antennae (116, 118) are placed in the front of the opening (102) and below said opening (102), each antenna (116, 118) being orientated at an angle of 15° upwards and in the direction of said opening (102).

10. A collection device comprising:
- a device (100) for reading tags according to any one of the preceding claims,
- automatic payment means.

11. A method for reading RFID tags by at least one antenna (112-118) utilizing the device according to any one of the preceding claims, each of said tags being borne by an object, **characterized in that** it comprises a determination (406) of the reading power as a function of the total weight of said objects.

12. The method according to claim 11, **characterized in that** it comprises moreover a mechanical modification (110) to the orientation of at least one object bearing an RFID tag during the reading (408).

13. A use of the method according to any one of claims 11 or 12 for automatic collection.
